Europäisches Patentamt

European Patent Office

Office européen des brevets

(19)

(11) Numéro de publication : **0 460 998 A1**

## (12) DEMANDE DE BREVET EUROPEEN

(21) Numéro de dépôt : **91401374.3**

(22) Date de dépôt : **29.05.91**

(51) Int. Cl.⁵ : **H01G 1/147**

(30) Priorité : **08.06.90 FR 9007170**

(43) Date de publication de la demande :
**11.12.91 Bulletin 91/50**

(84) Etats contractants désignés :
**DE ES FR GB IT**

(71) Demandeur : **COMPAGNIE EUROPEENNE DE COMPOSANTS ELECTRONIQUES LCC**
**50, rue Jean-Pierre Timbaud**
**F-92400 Courbevoie (FR)**

(72) Inventeur : **Pageaud, Michel**
**THOMSON-CSF, SCPI, Cédex 67**
**F-92045 Paris la Défense (FR)**
Inventeur : **Dautriche, Michel**
**THOMSON-CSF, SCPI, Cédex 67**
**F-92045 Paris la Défense (FR)**

(74) Mandataire : **Ruellan-Lemonnier, Brigitte et al**
**THOMSON-CSF SCPI**
**F-92045 PARIS LA DEFENSE CEDEX 67 (FR)**

(54) **Condensateur feuilleté et procédé de fabrication d'un tel condensateur.**

(57)    L'invention concerne un condensateur feuilleté réalisé par empilement de films métallisés (13, 14). Selon l'invention, l'armature de sortie (24) du type multicouche présente des couches intermédiaires qui sont constituées d'alliages des couches qui les jouxtent.

L'invention concerne également un procédé de fabrication du condensateur dans lequel les couches intermédiaires de l'armature de sortie (22), sont réalisés par projection de métal en fusion.

FIG_2

La présente invention concerne un condensateur feuilleté du type comportant un bloc réalisé par empilement de bandes formant condensateur, par exemple de films plastiques métallisés, les bandes étant convenablement reliées mécaniquement et électriquement par deux armatures de sortie, chaque armature étant constituée d'une succession de couches métalliques déposées sur les flancs opposés du bloc.

La fabrication de condensateurs empiles à partir de films plastiques métallisés est connue. On utilise généralement des films plastiques comportant une zone métallisée et une marge latérale non métallisée. On superpose deux films, leurs marges latérales non métallisées étant sur des côtés opposés afin d'obtenir une paire de films constituée d'un film de rang pair et d'un film de rang impair. On enroule, sur une roue de grand diamètre, au moins une paire de films métallisés suivant un nombre de tours déterminé.

On obtient ainsi un ruban capacitif comportant des couches de rang pair et impair alternées, appelé condensateur-mère. On recouvre ensuite avec un métal (ou alliage) chacun des flancs du ruban capacitif afin de réaliser des armatures de sortie. Chaque armature de sortie permet de relier mécaniquement et électriquement entre elles les métallisations des couches de même rang. Cette opération, réalisée par projection de métal en fusion, est connue sous la dénomination de shoopage.

Pour améliorer les résultats de cette opération, le décalage des films pairs par rapport aux films impairs est recommande et permet de loger les grains de shoopage afin d'avoir un accrochage des films du même rang optimum. Ce décalage s'appelle débord et est contrôle pendant l'opération bobinage des films sur la roue de grand diamètre. Un découpage du ruban capacitif en blocs permet d'obtenir des condensateurs distincts, généralement de forme parallélépipède. Ils sont feuilletés et constitués d'un empilement de feuilles de rang pair et impair alternées, maintenues entre deux armatures de sortie situées sur les flancs opposés du bloc. Des éléments de connexion sont ensuite fixés sur les armatures de sortie de chaque condensateur.

Il est également connu de réaliser les armatures de sortie sous la forme d'une double couche métallique présentant une couche interne adjacente aux films métallisés et une couche externe, les couches étant de compositions métalliques différentes. En effet, il s'avère souvent nécessaire de déposer une couche externe dont la composition métallique est choisie pour ses bonnes propriétés de soudage, sur la couche interne dont la composition métallique est choisie pour ses bonnes propriétés d'adhérence, de tenue physique et thermique et de conduction électrique.

Toutefois, la différence des compositions métalliques utilisées pour les deux couches des armatures fragilise la liaison d'interface entre ces deux couches, notamment en cas de variations rapides de température. En effet, les couches présentent des coefficients de dilatation linéaire différents, d'où l'apparition de fissures entraînant une dégradation (par augmentation) de la résistance série du condensateur (E.S.R.).

L'invention a pour but de remédier à cet inconvénient et de proposer un condensateur de meilleure résistance, notamment aux effets thermiques, sans pour autant augmenter son coût de fabrication.

L'invention propose donc un condensateur feuilleté réalisé par empilement de bandes métallisées constituant un bloc, lesdites bandes étant convenablement reliées mécaniquement et électriquement par des armatures de sortie situées sur les parois latérales du bloc, caractérisé en ce que chaque armature est constituée d'une succession d'un nombre impair de couches de métal ou d'alliage métallique réalisées indépendamment les unes des autres, chaque couche de rang pair étant composée par un alliage des métaux ou des alliages métalliques des couches de rangs impairs qui la jouxtent.

La présence des couches d'alliages métalliques de rang pair selon l'invention permet d'améliorer la solidité mécanique à l'arrachement des brins de connexion car les couches qui les jouxtent sont alors fortement liées.

L'invention concerne également un procédé de fabrication d'un condensateur selon l'invention, dans lequel la succession de couches est déposée par projection de métal en fusion, le procédé étant caractérisé en ce qu'il comporte les étapes successives suivantes dans le cas où, par exemple, chaque armature est constituée de trois couches :

– projection du métal, ou alliage, constitutif de la couche interne de rang 1,
– projection simultanée des métaux, ou alliages constitutifs, des deux couches interne et externe, ou projection de leur mélange précomposé, pour constituer la couche intermédiaire de rang 2,
– projection du métal ou alliage constitutif de la couche externe de rang 3.

Il est à noter que l'exemple du procédé selon l'invention peut être mis en oeuvre sans agencement particulier additionnel et permet même de réduire les coûts de fabrication par suite de la réduction du temps total de dépôt des deux couches de l'armature, le dépôt de la couche intermédiaire étant réalisé en temps masqué.

Avantageusement, la cohésion des deux couches de l'armature est accrue par augmentation de la densité du métal ou d'alliage projeté pendant la phase de constitution de la couche intermédiaire, en particulier pendant la phase de projection simultanée selon une caractéristique supplémentaire, l'invention consiste à choisir la succession des métaux ou des alliages métalliques constituant les couches de rangs impairs en tenant compte des coefficients de dilatation linéique desdits métaux ou alliages métalliques.

Ainsi est-il avantageux que le métal ou l'alliage métallique d'une couche de rang impair n ait un coefficient de dilatation linéique dont la valeur est comprise entre celle du métal ou alliage métallique de la couche de rang (n-2) et celle du métal ou alliage métallique de rang (n + 2).

D'autres avantages et caractéristiques de l'invention apparaîtront à la lecture de la description qui va suivre, donnée à titre d'exemple non limitatif et qui se réfère aux dessins ci-annexes dans lesquels :

– la figure 1 est une vue en coupe partielle d'une partie d'un condensateur réalisé selon une technique antérieure à l'invention,

– et la figure 2 est une vue en coupe partielle d'une partie d'un condensateur selon l'invention.

La présente invention sera décrite en se référant à un mode de réalisation d'armatures comprenant trois couches. Il est évident pour l'homme de l'art qu'elle peut s'appliquer à un nombre de couches plus important si nécessaire.

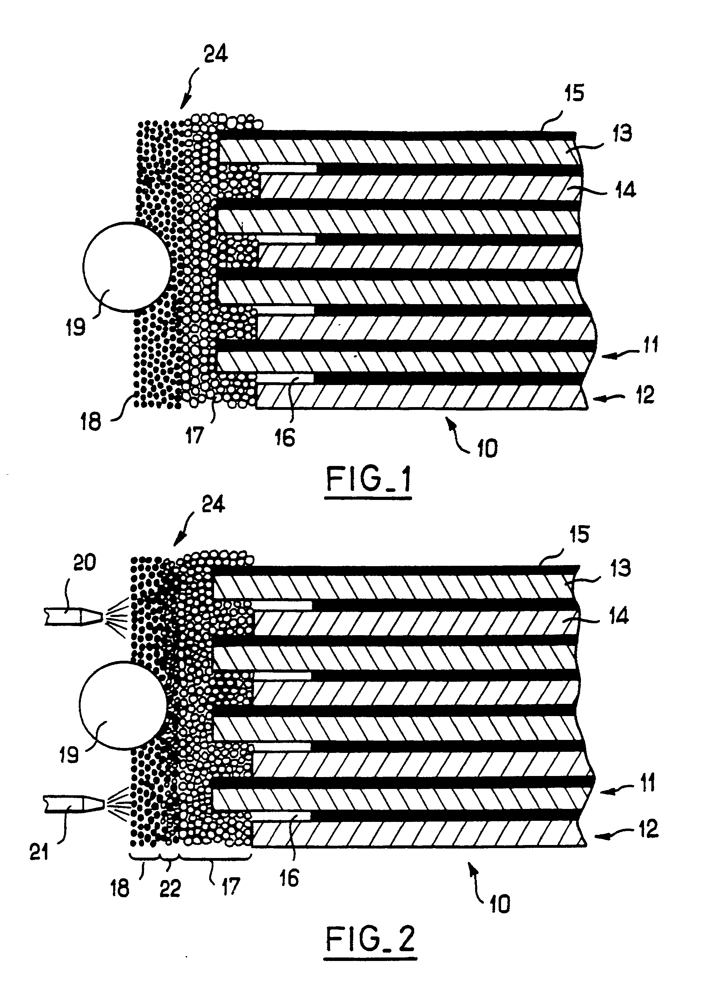

Selon la figure 1, les deux plaques ou faces actives 11 et 12 du condensateur sont constituées d'un film plastique 13 et 14 en polyester métallise ou en toute autre matière susceptible d'être travaillée en bande mince (d'environ quelques microns) et d'être métallisé. Il est avantageux que les métallisations 15 ne recouvrent pas entièrement toute la face des films 13 et 14 pour laisser subsister des marges latérales 16. Pour un même film, les marges 16 sont situées d'un même côte. L'assemblage du condensateur est effectue sous forme d'un bloc empilé 10 de façon telle que les films impairs aient leurs marges situées d'un même côté de l'empilement et que les films pairs aient leurs marges situées du côté opposé. Par le procédé du shoopage, un métal (ou alliage) est projeté en fusion sur les flancs opposés du bloc 10 ainsi réalisé, notamment sur les parties débordantes des films pairs et des films impairs, en petits grains qui viennent faire contact électrique sur la partie métallisée reliant ainsi toutes les feuilles paires (et toutes les feuilles) impaires ensemble par une couche interne 17. Le métal de la couche interne 17 est généralement de même nature que celui de la partie métallisée des films. Afin de permettre la soudure du brin de connexion 19, il est procédé à la projection d'un autre métal ou alliage, par exemple en étain-plomb ou toute autre matière soudable pour réaliser la couche externe 18 sur laquelle sera soude le brin 19. Les deux couches 17 et 18 forment ainsi une armature de sortie 24 pour le condensateur. Il est à noter que seule une partie de l'armature gauche du condensateur est montrée sur la figure 1. Bien entendu, une armature identique est déposée sur la face opposée (la face droite) du bloc 10.

Le condensateur selon l'invention représenté en coupe partielle à la figure 2 diffère de celui illustre à la figure 1 par l'existence d'une couche intermédiaire 22 entre les deux couches 17 et 18 de l'armature 24 et réalisée par mélange des composants métalliques des compositions des deux couches. Pour ce faire, selon le procédé de l'invention, on effectue successivement les étapes de projection par fusion suivantes :

– projection par un pistolet (ou buse) 20 du métal (ou alliage) constitutif de la couche interne 17 ;

– projection simultanée par des pistolets (ou buses) 20, 21 des métaux (ou alliages) constitutifs des deux couches 17 et 18 ;

– projection par le pistolet (ou buse) 21 du métal (ou alliage) constitutif de la couche externe 18.

Il se forme ainsi, pendant la projection simultanée, une couche intermédiaire où les grains projetés par les deux buses sont mélangés entre eux, imbriqués et accrochés ensemble. D'une façon pratique les blocs 10 défilent à l'état de ruban capacitif (avant découpe) devant les buses 20 et 21 pour réaliser un balayage appelé "passe". A titre d'exemple non limitatif, on effectue sept "passes" pour réaliser la couche interne 17, puis cinq "passes" de projection simultanée pour réaliser la couche intermédiaire 22, enfin sept "passes" pour réaliser la couche externe 18, l'ensemble des trois couches ainsi réalisées présentant une épaisseur d'environ 0,4 millimètre. Avantageusement, il est possible de ralentir la vitesse de défilement du ruban capacitif pendant la phase de projection simultanée pour accroître la densité des grains dans la zone de transition 22 et améliorer la cohésion de celle-ci.

Bien entendu, sans sortir du cadre de l'invention, le melange constitutif de la couche intermédiaire peut être pré-préparé à partir des compositions métalliques retenues pour les couches interne et externe, puis projeté par une buse spécifique entre les phases de projection des couches interne et externe.

L'invention est utilisable avec tout type de film métallisé ou non, en particulier et de façon non limitative, le polyester (polytéréphtalate d'etylène glycol), le polycarbonate, le polypropylène, le polysulfone, etc... Pour la couche interne 17, le choix de la composition en composants métalliques se porte parmi les métaux et alliages présentant de bonnes proprietés de conduction électrique et d'adhérence par rapport au film plastique utilisé, en particulier et de façon non limitative, le zinc, l'aluminium et leurs alliages. Pour la couche externe 18, le choix de la composition en composants métalliques se porte parmi les métaux et alliages présentant de bonne propriétés de conduction et de soudage avec les brins de connexion extérieure, en particulier, et de façon non limitative, des compositions monométalliques (étain), des alliages binaires (zinc/plomb, zinc/étain, étain/plomb) ou des alliages ternaires (étain/antimoine/cuivre).

## Revendications

1. Condensateur feuilleté réalisé par empilement de bandes métallisées (13, 14), constituant un bloc (10), lesdites bandes étant convenablement reliées mécaniquement et électriquement par des armatures de sortie (24) situées sur les parois latérales du bloc, caractérisé en ce que chaque armature est constituée d'une succession d'un nombre impair de couches de métal ou d'alliage métallique réalisées indépendamment les unes des autres, chaque couche de rang pair étant composée par un alliage des métaux ou des alliages métalliques des couches de rangs impairs qui la jouxtent.

2. Condensateur feuilleté suivant la revendication 1, caractérisé en ce que le coefficient de dilatation linéique du métal ou de l'alliage métallique constitutif de chaque couche de rang impair a une valeur comprise entre les valeurs des coefficients de dilatation linéique des deux métaux ou alliages métalliques constitutifs des couches de rangs impairs qui l'encadrent.

3. Condensateur feuilleté selon les revendications 1 et 2 dans lequel les bandes formant condensateur sont du type film plastique métallisé, caractérisé en ce que les composants métalliques de la couche interne (17) sont choisis parmi les métaux et alliages présentant de bonnes propriétés de conduction électrique et d'adhérence par rapport audit film plastique métallisé, notamment parmi le zinc, l'aluminium et leurs alliages.

4. Condensateur feuilleté selon les revendications 1 à 3, caractérisé en ce que les composants métalliques de la couche externe (18) sont choisis parmi les métaux et alliages présentant de bonnes propriétés de conduction et de soudage avec les brins de connexion extérieure ( 19), notamment parmi l'étain et les alliages binaires ou ternaires tels que zinc/plomb, zinc/étain, étain/plomb, étain/antimoine/cuivre.

5. Procédé de fabrication d'un condensateur feuilleté selon l'une quelconque des revendications précédentes, caractérisé en ce que chaque armature de sortie est réalisé par la constitution d'une succession d'un nombre impair de couches de métal ou d'alliages métalliques réalisées indépendamment les unes des autres, chaque couche de rang pair étant composée par un alliage des métaux ou des alliages métalliques des couches de rangs impairs qui la jouxtent.

FIG_1

FIG_2

Office européen
des brevets

RAPPORT DE RECHERCHE EUROPEENNE

Numéro de la demande

EP    91 40 1374

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3549956 (H. POLLE)<br>* colonne 4, lignes 19 - 50; revendication 1; figure *<br>--- | 1, 5 | H01G1/147 |
| A | DE-A-2108715 (P. R. MALLORY & CO.)<br>--- | | |
| A | PATENT ABSTRACTS OF JAPAN<br>vol. 013, no. 413 (E-820) 12 septembre 89,<br>& JP-A-01 152712 (MATSUSHITA ELECTRIC IND CO) 15 juin 89,<br>* le document en entier *<br>----- | | |

DOMAINES TECHNIQUES RECHERCHES (Int. Cl.5 )

H01G

Le présent rapport a été établi pour toutes les revendications

| Lieu de la recherche | Date d'achèvement de la recherche | Examinateur |
|---|---|---|
| LA HAYE | 30 AOUT 1991 | PUHL A.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant